# EUROPEAN PATENT APPLICATION

(11) **EP 2 610 451 A1**
(43) Date of publication of application: **03.07.2013**
(21) Application number: 10856385.9
(22) Date of filing: 23.08.2010
(51) Int. Cl.: F01N 3/08, B01D 53/94, F01N 3/28

(54) **EXHAUST PURIFICATION DEVICE FOR INTERNAL COMBUSTION ENGINE**

(71) Applicant: TOYOTA JIDOSHA KABUSHIKI KAISHA, Aichi-ken, 471-8571 (JP)
(72) Inventor: SAKURAI, Kenji, Toyota-shi Aichi 471-8571 (JP); KIDOKORO, Toru, Toyota-shi Aichi 471-8571 (JP); OBUCHI, Tsuyoshi, Toyota-shi Aichi 471-8571 (JP); KATUMATA, Youichi, Toyota-shi Aichi 471-8571 (JP)
(74) Representative: Smith, Samuel Leonard
(86) International application number: PCT/JP2010/064182
(87) International publication number: WO 2012/025976

(57) **Abstract**

An exhaust emission control device of an internal combustion engine capable of effectively restoring an NSR catalyst from sulfur poisoning while suppressing reduction of fuel efficiency and worsening of emission, in the internal combustion engine including the NSR catalyst and SCR.

An exhaust emission control device of an internal combustion engine 10 capable of a lean burn operation includes a TWC 201 that is placed in an exhaust passage 16 of the internal combustion engine 10 and supports a precious metal in an inside thereof, an NSR catalyst 202 that is placed at an exhaust downstream side of the TWC 201 and supports a precious metal and a base in an inside thereof, and an SCR 22 that is placed in the exhaust passage 16 at a downstream side of the NSR catalyst, wherein the NSR catalyst 202 is placed in a region in which a bed temperature at a time of an operation thereof becomes 500°C to 750°C. The TWC 201 and the NSR catalyst 202 are preferably configured as an SC 20 of a tandem structure in which the TWC 201 and the NSR catalyst 202 are integrated by being serially arranged.

## Description

### Technical Field

The present invention relates to an exhaust emission control device of an internal combustion engine, and more particularly relates to an exhaust emission control device of an internal combustion engine, which includes an NOx storage-reduction catalyst and an NOx selective catalytic reduction.

### Background Art

Conventionally, as disclosed in, for example, Japanese Patent Laid-Open No. 2008-303759, a system has been known, in which a three-way catalyst, an NOx storage-reduction catalyst (hereinafter, called "NSR catalyst") and an NOx selective catalytic reduction (hereinafter, called "SCR") are arranged in this order from the upstream side, in an exhaust passage of an internal combustion engine. In the three-way catalyst and the NSR catalyst, nitrogen and hydrogen, and/or HC and NOx react with each other under rich atmosphere, whereby ammonia (NH₃) is generated. The SCR has the function of adsorbing ammonia (NH₃), and stores NH₃ that is generated in the three-way catalyst and the NSR catalyst in an inside thereof. The stored NH₃ is used when NOx which flows into the SCR is selectively reduced.

Patent Document 1: JP-A-2008-303759

### Disclosure of the Invention

### Problems to be Solved by the Invention

Incidentally, an NSR catalyst is arranged in a region where a catalyst bed temperature becomes about 350 to 450°C, as a temperature environment which is considered as preferable for storage and purifying reaction of NOx. However, the temperature range of the catalyst bed temperature is also a preferable temperature condition for adhesion of a phosphor component which is contained in exhaust gas, and therefore, deterioration by sulfur poisoning is caused in the NSR catalyst in a relatively short time. When phosphor poisoning of the NSR catalyst advances, the bed temperature of the NSR catalyst is increased to 700°C, and the NSR catalyst is exposed to rich atmosphere, whereby the adhering sulfur component can be effectively desorbed. However, in order to increase the bed temperature of an NSR catalyst to 700°C, a great deal of thermal energy is required. Therefore, if the increase of the temperature is performed by rich control of an air-fuel ratio, serious reduction in fuel efficiency becomes a problem. Further, as another method, it is conceivable to increase the bed temperature of the NSR catalyst by additionally providing an exhaust heat recovery device or the like, but for this, complication of the system and increase of cost become problems. As above, establishment of a system is desired, which can perform restoring processing from sulfur poisoning without causing reduction in fuel efficiency and complication of the system, when sulfur poisoning of an NSR catalyst advances.

The present invention is made to solve the problems as described above, and has an object to provide an exhaust emission control device of an internal combustion engine which can effectively restore an NSR catalyst from sulfur poisoning while suppressing reduction in fuel efficiency and worsening of emission.

### Means for Solving the Problems

In accomplishing the above object, according to a first aspect of the present invention, there is provided an exhaust emission control device of an internal combustion engine capable of a lean-burn operation, the device comprising:
a first catalyst that is placed in an exhaust passage of the internal combustion engine, and supports a precious metal in an inside thereof;
a second catalyst that is placed at an exhaust downstream side of the first catalyst, and supports a precious metal and a base in an inside thereof; and
an NOx selective catalytic reduction that is placed in an exhaust passage at a downstream side of the second catalyst,
wherein the second catalyst is placed in a predetermined exhaust upstream region in the exhaust passage.

According to a second aspect of the present invention, there is provided the device as described in the first aspect, wherein the second catalyst is placed in a region in which a bed temperature at a time of an operation thereof becomes 500°C to 750°C.

According to a third aspect of the present invention, there is provided the device as described in the first or second aspects, wherein the first catalyst and the second catalyst are of a tandem structure in which the first catalyst and the second catalyst are integrated by being serially arranged.

According to a fourth aspect of the present invention, there is provided the device as described in any one of the first to third aspects, further comprising:
determining means that determines whether or not sulfur poisoning of the second catalyst advances; and
rich gas introducing means that introduces rich gas into the second catalyst, when it is determined that the sulfur poisoning advances.

According to a fifth aspect of the present invention, there is provided the device as described in the fourth aspect, further comprising:
NOx concentration acquiring means that acquires an NOx concentration of exhaust gas at a downstream side of the NOx selective catalytic reduction,
wherein the determining means determines that sulfur poisoning of the second catalyst advances, when the NOx concentration is higher than a predetermined concentration.

According to a sixth aspect of the present invention, there is provided the device as described in the fourth or fifth aspects, wherein the determining means determines that sulfur poisoning of the second catalyst advances, when a traveling distance after previous execution of the rich gas introducing means is longer than a predetermined distance.

According to a seventh aspect of the present invention, there is provided the device as described in any one of the fourth to sixth aspects, wherein the internal combustion engine is an internal combustion engine having a plurality of cylinders,
the rich gas introducing means includes air-fuel ratio control means that, out of a first and a second cylinder groups that are a result of dividing the plurality of cylinders, controls an exhaust air-fuel ratio of the first cylinder group to a predetermined rich air-fuel ratio, and controls an exhaust air-fuel ratio of the second cylinder group to a predetermined rich or a theoretical air-fuel ratio.

According to a eighth aspect of the present invention, there is provided the device as described in any one of the fourth to seventh aspects, wherein the rich gas introducing means introduces slight rich exhaust gas to the second catalyst.

According to a ninth aspect of the present invention, there is provided the device as described in any one of the fourth to eighth aspects, further comprising:
second determining means that determines whether or not it is timing for performing malfunction diagnosis of the first catalyst; and
malfunction diagnosing means that executes active air-fuel ratio control that forcefully switches an air-fuel ratio of the internal combustion engine to a rich side and a lean side alternately with a theoretical air-fuel ratio set as a control center, and executes malfunction diagnosis of the first catalyst, based on an oxygen storage capacity measured thereby, when it is timing for performing the malfunction diagnosis of the first catalyst,
wherein the rich gas introducing means
shifts the control center in the active air-fuel ratio control to a rich direction by a predetermined amount, when it is timing for performing the malfunction diagnosis of the first catalyst, and it is determined that sulfur poisoning of the second catalyst advances.

### Advantages of the Invention

According to the first invention, the second catalyst is placed in a predetermined exhaust upstream region. Such an exhaust upstream region is a region where the catalyst bed temperature becomes a high temperature by transferred heat from the internal combustion engine and incoming heat from the exhaust gas at a high temperature, and therefore, a sulfur component hardly adheres to a basic substance. Therefore, according to the present invention, the situation in which sulfur poisoning of the second catalyst advances in a short time can be effectively suppressed.

According to the second invention, the second catalyst is placed in a region in which a bed temperature at a time of an operation thereof becomes 500°C to 750°C. In such an operation temperature region, a sulfur component hardly adheres to the basic substance. Therefore, according to the present invention, the situation in which sulfur poisoning of the second catalyst advances in a short time can be effectively suppressed.

According to the third invention, the first catalyst and the second catalyst are of a tandem structure in which the first catalyst and the second catalyst are integrated by being serially arranged. Therefore, according to the present invention, a cost reduction effect by reduction of the number of components and simplification of the structure can be provided.

In order to desorb a sulfur component from the second catalyst, it is necessary to increase the catalyst bed temperature to approximately 700°C, and expose the interior of the catalyst to rich atmosphere. According to the fourth invention, rich gas is introduced to the second catalyst when it is determined that the sulfur poisoning of the second catalyst advances. The rich gas component contributes to increase of the temperature in the second catalyst and formation of rich atmosphere. Therefore, according to the present invention, the second catalyst can be easily placed under high-temperature and rich atmosphere, and therefore, the NSR catalyst can be easily restored from sulfur poisoning.

According to the fifth invention, it is determined that sulfur poisoning of the second catalyst advances when the NOx concentration of the exhaust gas at the downstream side of the NOx selective catalytic reduction (SCR) is higher than a predetermined concentration. When NOx is blown through to the downstream side of the SCR, it can be determined that NH₃ is insufficient in the SCR, that is, sulfur poisoning of the second catalyst advances, and the generation efficiency of NH₃ in the second catalyst is reduced. Therefore, according to the present invention, the degree of advancement of sulfur poisoning of the second catalyst can be effectively determined based on the NOx concentration at the downstream side of the SCR.

According to the sixth invention, it is determined that sulfur poisoning of the second catalyst advances when a traveling distance after previous execution of regeneration processing from sulfur poisoning is longer than a predetermined distance. Sulfur poisoning of the second catalyst gradually advances as a continuous traveling distance becomes longer. Therefore, according to the present invention, the degree of advancement of the sulfur poisoning of the second catalyst can be effectively determined based on such a traveling distance.

According to the seventh invention, the exhaust air-fuel ratio of the first cylinder group is controlled to a predetermined rich air-fuel ratio, and the exhaust air-fuel ratio of the second cylinder group is controlled to a predetermined lean air-fuel ratio, whereby the exhaust air-fuel ratio of the exhaust gas which flows into the second catalyst can be effectively controlled to a rich air-fuel ratio.

According to the eighth invention, a slight rich gas is introduced to the second catalyst when it is determined that sulfur poisoning of the second catalyst advances. Therefore, according to the present invention, the NSR catalyst can be easily restored from sulfur poisoning while worsening of emission and fuel efficiency are suppressed.

According to the ninth invention, the control center of the air-fuel ration in the active air-fuel ratio control is shifted to a rich side, when it is timing for performing malfunction diagnosis of the first catalyst by using active control, and it is determined that sulfur poisoning of the second catalyst advances. Therefore, according to the present invention, sulfur poisoning restoration processing of the second catalyst can be executed in the process of executing malfunction diagnosis of the first catalyst.

### Brief Description of the Drawings

Figure 1 is a diagram for explaining a configuration of embodiment 1 of the present invention.
Figure 2 is views for explaining internal structures of the TWC and the NSR catalyst.
Figure 3 is a flowchart of a routine executed in Embodiment 1 of the present invention.
Figure 4 is a flowchart of a routine executed in Embodiment 2 of the present invention.

### Best Mode for Carrying Out the Invention

Hereinafter, several embodiments of the present invention will be described on the basis of the drawings. The common elements in the respective drawings are assigned with the same reference signs and the redundant description will be omitted. Further, the present invention is not limited by the following embodiments.

### Embodiment 1.

### [Configuration of embodiment 1]

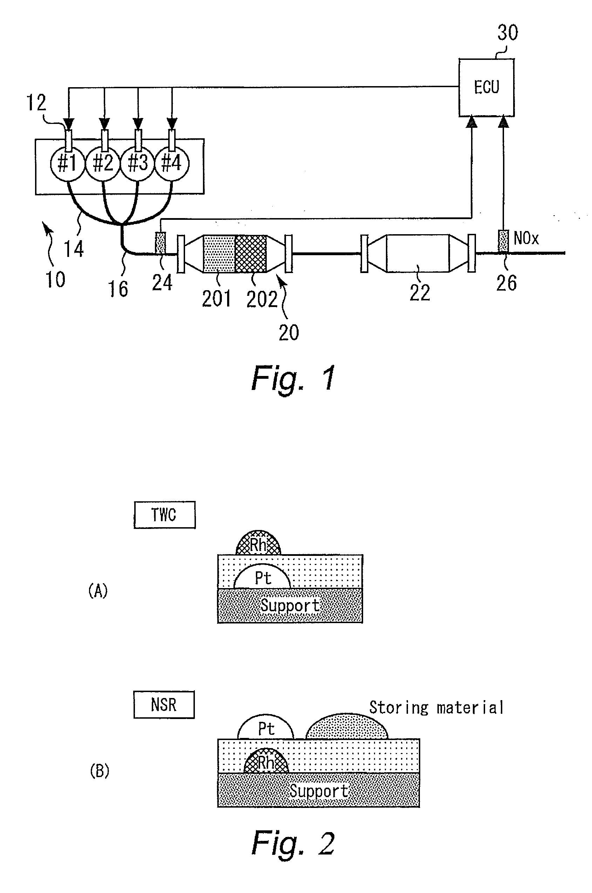

Figure 1 is a diagram for explaining a configuration of embodiment 1 of the present invention. As shown in Figure 1, a system of the present embodiment includes an internal combustion engine (engine) 10. The internal combustion engine 10 is configured as a multiple cylinder engine (four-cylinder in the drawing), and in the respective cylinders, fuel injection valves 12 for injecting a fuel into the cylinders are respectively disposed. Though in the system of Figure 1, the in-line four-cylinder engine is described, the engine may be configured as a V-type multiple cylinder engine. Further, in the system of Figure 1, a direct-injection type fuel injection valve which directly injects a fuel into a cylinder is used as the fuel injection valve 12, but a port injection type fuel injection valve which injects a fuel to a port of each cylinder may be adopted.

An exhaust passage 16 communicates with an exhaust side of the internal combustion engine 10 via an exhaust manifold 14. In the exhaust passage 16, a start catalyst (hereinafter, called "SC") 20 is placed. The SC 20 has an objective of purifying exhaust gas quickly by developing catalyst activity at a time of cold start or the like of the internal combustion engine 10, and therefore, the SC 20 is arranged in a predetermined exhaust upstream region which is susceptible to transferred heat from the engine and incoming heat from exhaust gas. The SC 20 is arranged in such an exhaust upstream region, whereby the bed temperature at a time of operation thereof is increased to 600 to 700°C.

The SC 20 of the system of the present embodiment 1 is configured as a catalyst of a tandem structure including a three-way catalyst (hereinafter, called "TWC") 201 at a front stage portion, and an NSR catalyst (NOx storage-reduction catalyst) 202 at a rear stage portion. The internal combustion engine 10 easily discharges HC and CO when an air-fuel ratio is rich. Further, the internal combustion engine 10 easily discharges NOx when the air-fuel ratio is lean. The TWC 201 in the SC 20 reduces NOx (purifies NOx to N₂) while adsorbing oxygen (O₂) in lean atmosphere. Meanwhile, in rich atmosphere, the TWC 201 oxidizes HC and CO (purifies HC and CO to H₂O and CO₂) while releasing oxygen. Under the rich atmosphere, nitrogen contained in the exhaust gas reacts with hydrogen, whereby ammonia (NH₃) is generated.

The NSR catalyst 202 in the SC 20 stores NOx which is contained in exhaust gas under lean atmosphere. Further, the NSR catalyst 202 releases the stored NOx under rich atmosphere. The NOx which is released under the rich atmosphere is reduced by HC and CO. At this time, NH₃ is also generated in the NSR catalyst 202 similarly to the case of the SC 201.

The TWC 201 and the NSR catalyst 202 are preferably configured as, for example, a two-layer coat catalyst. Figure 2 is views for explaining internal structures of the TWC 201 and the NSR catalyst 202. In the drawing, (A) shows the internal structure of the TWC 201 in the front stage portion in detail, and (B) shows the internal structure of the NSR catalyst 202 in the rear stage portion in detail, respectively.

As shown in Figure 2 (A), the TWC 201 preferably has a structure which supports Pt (or PD) on a lower catalyst layer which is formed on a surface of a support substrate, and supports Rh on an upper catalyst layer formed on a surface of the lower catalyst layer. By supporting Rh and Pt separately like this, Rh is restrained from solidifying with Pd, and therefore, decrease of oxidation activity of Pt and decrease of reduction activity of Rh can be effectively suppressed.

Further, as shown in Figure 2 (B), the NSR catalyst 202 preferably adopts a structure which supports Rh on a lower catalyst layer formed on the surface of a support substrate, and supports Pt (or Pd) and an NOx storing material constituted of a base on an upper catalyst layer formed on surface of the lower catalyst layer. As above, by supporting Pt on the upper catalyst layer, contactability of exhaust gas and Pt becomes favorable, and therefore, NOx storage efficiency to the NOx storing material can be effectively enhanced. Further, by supporting Rh on the lower catalyst layer, H₂ which is generated by Rh in rich atmosphere passes through the upper catalyst layer, and therefore, reduction purification performance of the stored NOx can be effectively enhanced.

As shown in Figure 1, an SCR (NOx selective catalytic reduction) 22 is placed at a downstream side of the SC 20 in the exhaust passage 16. The SCR 22 has the function of storing NH₃ which the TWC 201 and the NSR catalyst 202 generate under stoichiometry or rich atmosphere, and selectively reducing NOx in exhaust gas with NH₃ as a reducer under lean atmosphere. According to the SCR 22, the situation in which the NH₃ and NOx which are blown through to downstream of the SC 20 are released to the atmosphere can be effectively inhibited.

The system shown in Figure 1 includes an air-fuel ratio (A/F) sensor 24 at an upstream side of the SC 20 in the exhaust passage 16. The A/F sensor 24 can detect an exhaust air-fuel ratio of the internal combustion engine 10. Further, the system shown in Figure 1 includes an NOx sensor 26 at a downstream side of the SCR 18 in the exhaust passage 16. The NOx sensor 26 responds to NOx and NH₃ in the exhaust gas, and generates signals corresponding to concentrations thereof. Therefore, according to the NOx sensor 26, the NH₃ concentration downstream of the SCR 22 can be detected under rich atmosphere, and the NOx concentration downstream of the SCR 22 can be detected under lean atmosphere, respectively.

The system of the present embodiment includes an ECU (Electronic Control Unit) 30 as shown in Figure 1. To an output section of the ECU 30, various actuators such as the fuel injection valve 12 described above are connected. To an input section of the ECU 30, various sensors for detecting operation conditions or an operation state of the internal combustion engine 10 are connected, besides the A/F sensor 24 and the NOx sensor 26 described above. The ECU 30 can control the state of the system shown in Figure 1 based on various kinds of information which are inputted.

### [Operation of embodiment 1]

### (NOx purifying function of the NSR catalyst 202)

First, the NOx purifying function of the NSR catalyst 202 will be described. The ECU 30 usually operates (lean operation) the internal combustion engine 10 with a lean air-fuel ratio. During a lean operation, a larger amount of oxidizer such as NOx than reducers such as HC and CO is discharged. Therefore, even if the exhaust gas is to be purified by using the TWC 201, all of NOx cannot be purified due to insufficiency of the reducers. Therefore, the system of the present embodiment 1 includes the NSR catalyst 202 at the downstream side of the TWC 201. The NSR catalyst 202 has the function of storing NOx as nitrate such as Ba(NO₃)₂. Therefore, according to the present embodiment 1, even during a lean operation, the situation in which the NOx is released into the atmosphere can be effectively suppressed.

However, the NOx storing performance of the NSR catalyst 202 reduces as the storage amount increases. Therefore, if the lean operation is continued for a long time period, the NOx which is not stored is blown through to downstream of the catalyst. Therefore, in the system of the present embodiment 1, rich spike control that regularly desorbs the NOx stored in the NSR catalyst 202 and treats the NOx is carried out. More specifically, at predetermined timing when the storage performance of the NSR catalyst 202 reduces, the exhaust air-fuel ratio of the internal combustion engine 10 is temporarily controlled to a rich air-fuel ratio (for example, A/F = 12). In the exhaust gas during execution of rich spike control, large amounts of reducers such as HC, CO and H₂ are included. Therefore, when these reducers are introduced into the NSR catalyst 202, the NOx which is stored as nitrate is reduced to NO and is desorbed from the base. The desorbed NOx is purified to N₂ or the like on the catalyst in the NSR catalyst 202 to be treated. As above, by executing rich spike control during a lean operation, NOx which is stored in the NSR catalyst 202 can be desorbed and treated, and therefore, the NOx storage performance can be effectively restored.

In order to cause the NOx storage/purification reaction in the NSR catalyst to be performed actively, it is preferable to increase the catalyst bed temperature thereof to about 350 to 450°, in general. However, as described above, in the system of the present embodiment 1, a position of the NSR catalyst 202 is adjusted so that the bed temperature of the NSR catalyst 202 is increased to 500 to 750°C. The reason of this will be described later.

### (NOx purifying function of the SCR 22)

Next, the NOx purifying function of the SCR 22 will be described. As described above, by execution of rich spike control, the NOx storage performance of the NSR catalyst 202 can be effectively restored. However, if rich spike control is executed, part of the NOx which is desorbed from the NSR catalyst 202 is blown thorough to downstream. Further, as described above, the NOx, which is blown through to downstream of the NSR catalyst 202 before execution of rich spike control, is also present. If the NOx which is blown through is directly released into the atmosphere, worsening of emission is caused.

Therefore, the system of the present embodiment 1 includes the SCR 22 for treating the NOx which is blown through to the downstream side of the NSR catalyst 202. As described above, the SCR 22 stores the NH₃, which the TWC 201 and the NSR catalyst 202 generate under rich atmosphere, in an inside thereof. Therefore, according to the SCR 22, the NOx which is blown through to downstream of the NSR catalyst 202 can be selectively reduced and purified with NH₃. Thereby, the situation in which NOx is released into the atmosphere and emission is worsened can be effectively inhibited.

According to the view of the inventor of the present application, by setting the bed temperature of the SCR 22 at 470°C or lower, preferably, 200 to 350°C, the reduction reaction in the SCR 22 can be made actively. Therefore, in the system of the present embodiment 1, the arrangement of the SCR 22 is adjusted so that the bed temperature of the SCR 22 becomes 200 to 350°C. Thereby, the situation in which NOx is released to downstream of the SCR 22 can be effectively inhibited.

### [Feature of the system of the present embodiment 1]

Next, the feature of the system of the present embodiment 1 will be described. As described above, the NSR catalyst exhibits a high NOx purification performance under the temperature environment in which the bed temperature is 350 to 450°C. Therefore, in the conventional system, the arrangement of the NSR catalyst is set so that the NSR catalyst belongs to the temperature range like this.

However, if the NSR catalyst is arranged in the temperature region of 350 to 450°C, the temperature condition also becomes favorable to adherence of a sulfur component. Therefore, under such a condition, sulfur poisoning of the NSR catalyst advances in a relatively short time, and the NOx purification performance and the NH₃ generation performance are significantly reduced.

In order to effectively desorb the sulfur component from the NSR catalyst in which sulfur poisoning advances, it is necessary to satisfy the two conditions shown as follows:
a) To increase the bed temperature of the NSR catalyst to about 700°C; and
b) To expose the inside of the NSR catalyst to rich atmosphere.

However, in order to increase the bed temperature of the NSR catalyst to about 700°C, a great deal of thermal energy is required. Therefore, if the temperature increase is to be performed by rich control of the air-fuel ratio, significant reduction of fuel efficiency becomes a problem. Further, it is also conceivable to increase the bed temperature of the NSR catalyst by additionally providing an exhaust heat recovery device or the like, but this raises problems such as complication of the system and cost increase. As above, various problems are present in sulfur desorption processing of the NSR catalyst.

Therefore, in order to solve the above described problems, the inventor of the present application has conceived of the system shown in the present embodiment. The system has the feature of including the NSR catalyst 202 at the rear stage portion of the SC 20 as shown in Figure 1. Namely, in the system of the present embodiment, the NSR catalyst 202 is placed in the temperature region (500 to 750°C) which differs from the conventional system. In such a temperature region, a sulfur component hardly adheres to the NSR catalyst 202, and therefore, the situation in which sulfur poisoning advances in a short time can be effectively inhibited. Accordingly, the execution frequency of the sulfur desorption processing of the NSR catalyst 202 can be effectively decreased.

Further, when the sulfur desorption processing of the NSR catalyst 202 is executed, the catalyst bed temperature is already in a high state, and therefore, by exposure to rich atmosphere, the bed temperature can be easily increased to the desorption temperature. Therefore, the NSR catalyst 202 can be effectively restored from sulfur poisoning without causing reduction of fuel efficiency and worsening of emission.

When the NSR catalyst 202 is placed in the high temperature region as in the system of the present embodiment 1 described above, the NOx purification efficiency of the NSR catalyst 202 reduces. Therefore, in the system of the present embodiment 1, the capacity/characteristics and the like of the catalysts are adjusted so that purification of NOx is executed in the SCR 22 placed at the downstream side of the NSR catalyst 202 with the main objective of the NSR catalyst 202 as generation of NH₃ rather than purification of NOx. Thereby, even when the NSR catalyst 202 is arranged in a high-temperature region, worsening of NOx emission can be effectively inhibited.

The advancing degree of sulfur poisoning in the NSR catalyst 202 can be determined based on the NOx concentration downstream of the SCR 22, for example. This is because if sulfur poisoning of the NSR catalyst 202 advances, and the NH₃ generation amount reduces, NH₃ becomes insufficient in the SCR 22, as a result of which, the NOx purification rate in the SCR 22 reduces. Therefore, in the system of the present embodiment, when the NOx concentration downstream of the SCR 22 is higher than a predetermined value (for example, 1.4 ppm), it is determined that sulfur poisoning of the NSR catalyst 202 advances, and sulfur desorption processing of the NSR catalyst 202 is executed.

In the sulfur desorption processing, it is necessary to increase the bed temperature of the NSR catalyst 202 to about 700°C, and expose the NSR catalyst 202 to rich atmosphere as described above, and in the system of the present embodiment, the NSR catalyst 202 is placed in the region in which the bed temperature of the NSR catalyst 202 becomes 700°C or a temperature close to 700°C. Accordingly, the above described two conditions can be easily satisfied by introducing rich gas to the NSR catalyst 202 by air-fuel ratio control. At this time, if the air-fuel ratio is controlled to an extremely rich air-fuel ratio, harmful effects such as emission worsening and fuel efficiency reduction occur, and therefore, the air-fuel ratio of each of the cylinders is preferably controlled so that the air-fuel ratio of the exhaust gas which flows into the NSR catalyst 202 becomes "slight rich" (for example, an target A/F = 14.3).

As the method for the air-fuel control, various methods are conceivable, and from the viewpoint of controllability of the air-fuel ratio, for example, the method that controls the air-fuel ratio of a predetermined cylinder to a rich air-fuel ratio during a lean burn operation is preferable. More specifically, in this method, a plurality of cylinders of the internal combustion engine 10 are classified into two cylinder groups (for example, a cylinder group constituted of #1 to #3 cylinders, and a cylinder group constituted of #2 to #4 cylinders), and the air-fuel ratio of one of the cylinder groups is controlled to a lean air-fuel ratio, whereas the air-fuel ratio of the other cylinder group is controlled to a rich air-fuel ratio. At this time, in order that the output of the air-fuel ratio sensor 24 placed in the exhaust passage 16 becomes an output showing "slight rich", the sensor output value is fed back to a fuel injection amount of each of the cylinders. Thereby, desired rich gas can be introduced to the NSR catalyst 202, and therefore, sulfur components can be effectively desorbed.

### [Specific processing in embodiment 1]

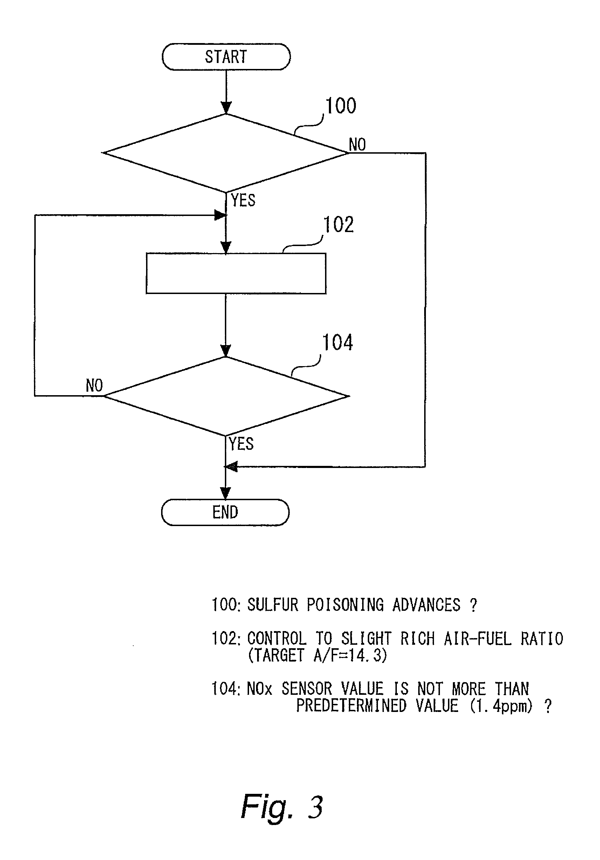

Next, with reference to Figure 3, a specific content of processing that is executed in the present embodiment will be described. Figure 3 is a flowchart of a routine of sulfur poisoning restoration processing of the NSR catalyst 202 which is executed by the ECU 30. The routine of Figure 3 is repeatedly executed during a lean burn operation of the internal combustion engine 10.

In the routine shown in Figure 3, it is first determined whether or not sulfur poisoning of the NSR catalyst 202 advances (step 100). Here, more specifically, it is determined whether or not the NOx sensor value detected by the NOx sensor 26 is a predetermined value (for example, 1.4 ppm) or less. When establishment of the NOx sensor value ≤ the predetermined value is recognized as a result, NH₃ is generated in the NSR catalyst 202 without a problem. Namely, sulfur poisoning of the NSR catalyst 202 is determined as not advancing, and the present routine is ended quickly.

Meanwhile, when establishment of the NOx sensor value ≤ the predetermined value is not recognized in the above described step 100, it is determined that the NH₃ generation amount in the NSR catalyst 202 reduces, that is, sulfur poisoning of the NSR catalyst 202 advances, and the flow shifts to the next step, where the exhaust air-fuel ratio is controlled to be "slight rich" (target A/F = 14.3) (step 102). Here, more specifically, one of the cylinder groups (for example, #1 to #3 cylinders) is controlled to a rich air-fuel ratio, whereas the other cylinder group (for example, #2 to #4) is controlled to lean air-fuel ratio, whereby the air-fuel ratio of the exhaust gas which flows into the NSR catalyst 202 is controlled to the target A/F of "slight rich".

In the routine shown in Figure 3, it is determined whether or not the NSR catalyst 202 is restored from sulfur poisoning next (step 104). Here, more specifically, the NOx sensor value is detected again by using the NOx sensor 26. Subsequently, it is determined whether or not the detected NOx sensor value is the predetermined value (1.4 ppm) or less. As a result, when establishment of the NOx sensor value ≤ the predetermined value is recognized, NH₃ is generated in the NSR catalyst 202 without a problem. Namely, it is determined that the NSR catalyst 202 is restored from sulfur poisoning, and the present routine is quickly ended. Meanwhile, when establishment of the NOx sensor value ≤ the predetermined value is not recognized in the above described step 104, it is determined that the NH₃ generation amount in the NSR catalyst 202 does not increase, that is, the NSR catalyst 202 is not restored from sulfur poisoning yet, the flow shifts to the above described step 102 again, and the flow shifts to the next step, where processing of controlling the exhaust air-fuel ratio to "slight rich" is executed again.

As described above, according to the system of the present embodiment 1, the NSR catalyst 202 is placed in the predetermined exhaust upstream region (500 to 750°C), and therefore, the situation in which sulfur poisoning of the NSR catalyst 202 advances in a short time can be inhibited. Further, according to the arrangement of the NSR catalyst 202 of the system of the present embodiment 1, the catalyst bed temperature is always in the high temperature state. Therefore, when sulfur desorption processing of the NSR catalyst 202 is executed, the catalyst bed temperature can be easily increased to the sulfur desorption temperature, and therefore, reduction of fuel efficiency and complication of the system can be effectively avoided.

Incidentally, in embodiment 1 described above, the NSR catalyst 202 is arranged at the rear stage portion of the SC 20 which is placed in the high-temperature region, but the configuration of the NSR catalyst 202 is not limited to this. Namely, if only the arrangement is such that the bed temperature of the NSR catalyst 202 is increased to 500 to 750°C, the NSR catalyst 202 may be configured as a separate body at the downstream side of the SC 20.

Further, in embodiment 1 described above, in the sulfur poisoning restoration processing of the NSR catalyst 202, one of the cylinder groups is controlled to a rich-air fuel ratio, and the other cylinder group is controlled to a lean air-fuel ratio, whereby the exhaust air-fuel ratio is controlled to be "slight rich" (target A/F = 14.3), but "slight rich" may be realized by controlling the exhaust air-fuel ratios of all the cylinders to the target A/F uniformly.

Further, in embodiment 1 described above, the sulfur poisoning state of the NSR catalyst 202 is detected based on the output signal of the NOx sensor 26, but the detection method of sulfur poisoning is not limited to this. Namely, advancement of sulfur poisoning may be determined when the traveling distance from the previous sulfur poisoning restoration processing reaches a predetermined distance (for example, 3000 km), or advancement of the sulfur poisoning may be determined by estimating the sulfur adsorption amount of the NSR catalyst 202 based on the information of the time, the traveling distance, the exhaust gas amount, the air-fuel ratio, the bed temperature or the like from the previous sulfur poisoning restoration processing.

In embodiment 1 described above, the TWC 201 corresponds to "first catalyst" in the aforementioned first invention, the NSR catalyst 202 corresponds to "second catalyst" in the aforementioned first invention, and the SCR 22 corresponds to "NOx selective catalytic reduction" in the aforementioned first invention, respectively.

Further, in embodiment 1 described above, the ECU 30 executes the processing of the above described step 100, whereby "determining means" in the aforementioned fourth invention is realized, and the ECU 30 executes the processing of the above described step 102, whereby "rich gas introducing means " in the aforementioned fourth invention is realized, respectively.

Further, in embodiment 1 described above, the NOx sensor 26 corresponds to "NOx concentration acquiring means" in the aforementioned fifth invention.

### Embodiment 2.

### [Feature of embodiment 2]

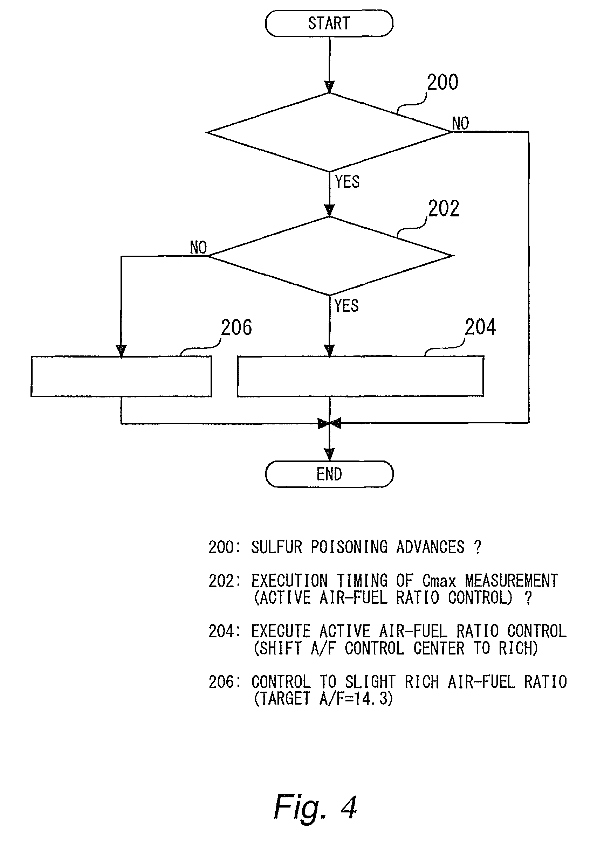

Next, with reference to Figure 4, embodiment 2 of the present invention will be described. The present embodiment 2 can be realized by executing a routine shown in Figure 4 which will be described later by using the system shown in Figure 1.

As described above, the TWC 201 which is arranged at the front stage portion of the SC 20 has the function as a three-way catalyst which simultaneously purifies three components that are HC, CO and NOx when the air-fuel ratio of the exhaust gas which flows in is a theoretical air-fuel ratio. The TWC 201 includes a precious metal (active spot) such as Pt and Pd, and an oxygen storage component capable of absorbing and releasing oxygen, as the catalyst components. When the air-fuel ratio of the exhaust gas which flows into the catalyst is richer than the theoretical air-fuel ratio, oxygen is released from the above described oxygen storage component, and by the released oxygen, unburned components such as HC and CO can be oxidized and purified. Conversely, when the air-fuel ratio of the exhaust gas which flows into the catalyst is leaner than the theoretical air-fuel ratio, the above described oxygen storage component absorbs excessive oxygen in the exhaust gas, whereby NOx can be reduced and purified. In this manner, the oxygen storage component absorbs and releases oxygen, whereby even if the air-fuel ratio of the exhaust gas which flows into the catalyst varies to some degree with respect to the theoretical air-fuel ratio, the three components that are HC, Co and NOx can be favorably purified.

In the three-way catalyst, the purifying performance thereof deteriorates with years of service. It is known that the deterioration degree of the catalyst relates to an oxygen storage capacity Cmax which is the maximum oxygen amount which the catalyst can store. Namely, as the oxygen storage capacity Cmax is lower, it can be determined that deterioration of the catalyst advances more. Accordingly, by measuring the oxygen storage capacity Cmax of the catalyst, deterioration of the catalyst can be detected.

In the system of the present embodiment, by executing active air-fuel ratio control, the oxygen storage capacity Cmax of the SC 20 is measured. Active air-fuel ratio control is control which forcefully switches the air-fuel ratio of the internal combustion engine 10 to a rich side and a lean side alternately with the theoretical air-fuel ratio therebetween. Concerning the measuring method of the oxygen storage capacity Cmax with use of active air-fuel ratio control, a number of known documents are already present, and therefore, the detailed description thereof will be omitted.

During execution of the active air-fuel ratio control described above, rich gas and lean gas alternately flow into the SC 20, and therefore, the bed temperature of the SC 20 increases. Therefore, in the system of the present embodiment, if it is the time for executing active air-fuel ratio control for measuring the oxygen storage capacity Cmax when it is determined that sulfur poisoning of the NSR catalyst 202 advances, sulfur desorption processing of the NSR catalyst 202 is performed by using the active air-fuel ratio control as above. More specifically, a control center of the air-fuel ratio in the active air-fuel ratio control is temporarily shifted to a predetermined slight rich air-fuel ratio (for example, A/F = 14.3) from the theoretical air-fuel ratio. Thereby, the above described two conditions necessary for sulfur desorption of the NSR catalyst 202 can be easily satisfied, and therefore, sulfur desorption processing of the NSR catalyst 202 can be effectively performed while malfunction diagnosis of the SC 20 is performed.

### [Specific processing in embodiment 2]

Next, with reference to Figure 4, a specific content of processing which is executed in the present embodiment will be described. Figure 4 is a flowchart of a routine of sulfur poisoning restoration processing of the NSR catalyst 202 executed by the ECU 30. The routine in Figure 4 is repeatedly executed during a lean burn operation of the internal combustion engine 10.

In the routine shown in Figure 4, it is first determined whether or not sulfur poisoning of the NSR catalyst 202 advances (step 200). Here, more specifically, the same processing as in the above described step 100 is executed. When establishment of the NOx sensor value ≤ the predetermined value is recognized as a result, it is determined that NH₃ is generated in the NSR catalyst 202 without a problem, that is, sulfur poisoning of the NSR catalyst 202 does not advance, and the present routine is quickly ended.

Meanwhile, when establishment of the NOx sensor value ≤ the predetermined value is not recognized in the above described step 200, it is determined that the NH₃ generation amount in the NSR catalyst 202 reduces, that is, sulfur poisoning of the NSR catalyst 202 advances, the flow shifts to the next step, and it is determined whether or not it is timing for measuring the oxygen storage capacity Cmax of the SC 20 (step 202). Here, more specifically, the determination is made based on whether or not the vehicle travels a predetermined distance from the previous measurement of the oxygen storage capacity Cmax, whether or not emission at the downstream side of the SC 20 is worsened and the like. When it is determined that it is the timing for measuring the oxygen storage capacity Cmax of the SC 20 as a result, the flow shift to the next step, and the active air-fuel ratio control with the control center of the air-fuel ratio shifted to the rich side is executed (step 204). Here, more specifically, the control center of the air-fuel ratio in the active air-fuel ratio control is set at a predetermined rich air-fuel ratio (for example, A/F = 14.3). Thereby, desorption of sulfur is performed in the NSR catalyst 202.

Meanwhile, when it is not determined as the timing for measuring the oxygen storage capacity Cmax of the SC 20 in the above described step 202, it is determined that the sulfur poisoning restoration processing and the malfunction diagnosis of the SC 20 cannot be performed simultaneously, the flow is shifted to the next step, and the exhaust air-fuel ratio is controlled to "slight rich" (target A/F = 14.3) (step 206). Here, more specifically, the same processing as in the above described step 102 is executed.

As described above, according to the present embodiment 2, measurement of the oxygen storage capacity Cmax of the SC 20 and the sulfur poisoning restoration processing of the NSR 202 are simultaneously performed, and therefore, in the process of executing malfunction diagnosis of the SC 20, sulfur poisoning restoration processing of the NSR catalyst 202 can be executed.

Incidentally, in embodiment 2 described above, the NSR catalyst 202 is arranged at the rear stage portion of the SC 20 which is placed in a high temperature region, but the configuration of the NSR catalyst 202 is not limited to this. Namely, as long as the arrangement is such that the bed temperature of the NSR catalyst 202 is increased to 600 to 700°C, the NSR catalyst 202 may be configured as a separate body at the downstream side of the SC 20.

Further, in embodiment 2 described above, the sulfur poisoning state of the NSR catalyst 202 is detected based on the output signal of the NOx sensor 26, but the detection method of sulfur poisoning is not limited to this. Namely, advancement of sulfur poisoning may be determined when the traveling distance after the previous sulfur poisoning restoration processing reaches a predetermined distance (for example, 3000 km), or the sulfur poisoning of the NSR catalyst 202 may be determined by estimating the sulfur adsorption amount of the NSR catalyst 202 based on information of the time, the traveling distance, the exhaust gas amount, the air-fuel ratio, the bed temperature and the like after the previous sulfur poisoning restoration processing.

In embodiment 2 described above, the ECU 30 executes the processing of the above described step 202, whereby "second determining means" in the aforementioned ninth invention is realized, and the ECU 30 executes the processing of the above described step 204, whereby "malfunction diagnosing means" and "rich gas introducing means" in the aforementioned ninth invention are realized respectively.

**Description of Reference characters**

| | |
|---|---|
| 10: | internal combustion engine (engine) |
| 12: | fuel injection valve |
| 14: | exhaust manifold |
| 16: | exhaust passage |
| 20: | start catalyst (SC) |
| 201: | three-way catalyst |
| 202: | NOx storage-reduction catalyst (NSR catalyst) |
| 22: | NOx selective catalytic reduction (SCR) |
| 24: | A/F sensor |
| 26: | NOx sensor |
| 30: | ECU (electronic control unit) |

## Claims

1. An exhaust emission control device of an internal combustion engine capable of a lean burn operation, comprising:
a first catalyst that is placed in an exhaust passage of the internal combustion engine, and supports a precious metal in an inside thereof;
a second catalyst that is placed at an exhaust downstream side of the first catalyst, and supports a precious metal and a base in an inside thereof; and
an NOx selective catalytic reduction that is placed in an exhaust passage at a downstream side of the second catalyst,
wherein the second catalyst is placed in a predetermined exhaust upstream region in the exhaust passage.

2. The exhaust emission control device of an internal combustion engine according to claim 1,
wherein the second catalyst is placed in a region in which a bed temperature at a time of an operation thereof becomes 500°C to 750°C.

3. The exhaust emission control device of an internal combustion engine according to claim 1 or 2,
wherein the first catalyst and the second catalyst are of a tandem structure in which the first catalyst and the second catalyst are integrated by being serially arranged.

4. The exhaust emission control device of an internal combustion engine according to any one of claims 1 to 3, further comprising:
determining means that determines whether or not sulfur poisoning of the second catalyst advances; and
rich gas introducing means that introduces rich gas into the second catalyst, when it is determined that the sulfur poisoning advances.

5. The exhaust emission control device of an internal combustion engine according to claim 4, further comprising:
NOx concentration acquiring means that acquires an NOx concentration of exhaust gas at a downstream side of the NOx selective catalytic reduction,
wherein the determining means determines that sulfur poisoning of the second catalyst advances, when the NOx concentration is higher than a predetermined concentration.

6. The exhaust emission control device of an internal combustion engine according to claim 4 or 5,
wherein the determining means determines that sulfur poisoning of the second catalyst advances, when a traveling distance after previous execution of the rich gas introducing means is longer than a predetermined distance.

7. The exhaust emission control device of an internal combustion engine according to any one of claims 4 to 6,
wherein the internal combustion engine is an internal combustion engine having a plurality of cylinders,
the rich gas introducing means includes air-fuel ratio control means that, out of a first and a second cylinder groups that are a result of dividing the plurality of cylinders, controls an exhaust air-fuel ratio of the first cylinder group to a predetermined rich air-fuel ratio, and controls an exhaust air-fuel ratio of the second cylinder group to a predetermined rich or a theoretical air-fuel ratio.

8. The exhaust emission control device of an internal combustion engine according to any one of claims 4 to 7,
wherein the rich gas introducing means introduces slight rich exhaust gas to the second catalyst.

9. The exhaust emission control device of an internal combustion engine according to any one of claims 4 to 8, further comprising:
second determining means that determines whether or not it is timing for performing malfunction diagnosis of the first catalyst; and
malfunction diagnosing means that executes active air-fuel ratio control that forcefully switches an air-fuel ratio of the internal combustion engine to a rich side and a lean side alternately with a theoretical air-fuel ratio set as a control center, and executes malfunction diagnosis of the first catalyst, based on an oxygen storage capacity measured thereby, when it is timing for performing the malfunction diagnosis of the first catalyst,
wherein the rich gas introducing means
shifts the control center in the active air-fuel ratio control to a rich direction by a predetermined amount, when it is timing for performing the malfunction diagnosis of the first catalyst, and it is determined that sulfur poisoning of the second catalyst advances.
